# EUROPEAN PATENT APPLICATION

(11) **EP 4 350 839 A1**
(43) Date of publication of application: **10.04.2024**
(21) Application number: 23197026.0
(22) Date of filing: 13.09.2023
(51) Int. Cl.: H01M 10/42, H01M 10/613, H01M 10/6235, H01M 10/643, H01M 10/6554, H01M 10/6555, H01M 50/213, H01M 50/227, H01M 50/233, H01M 50/258, H01M 50/271, H01M 50/287, H01M 50/296, H01M 50/507

(54) **BATTERY PACK FOR SUPPLYING POWER TO AN ELECTRONIC DEVICE**

(30) Priority: 08.10.2022 CN 202211231600
(71) Applicant: Nanjing Chervon Industry Co., Ltd., Nanjing, Jiangsu 211106 (CN)
(72) Inventor: ZHANG, Yuexiang, Nanjing (CN); CAO, Yafei, Nanjing, Jiangsu (CN)
(74) Representative: Sun, Yiming

(57) **Abstract**

A battery pack includes: a housing formed with multiple accommodating cavities; and multiple cells, where a cell has an outer peripheral surface, and the distance between at least part of the outer peripheral surface and the intra-cavity wall surface of a respective accommodating cavity is greater than or equal to 0 mm and less than or equal to 1 mm. The outer wall surface of the housing is a heat dissipation surface, and the heat dissipation area of the heat dissipation surface is larger than or equal to 4.5 dm² and smaller than or equal to 7 dm².

## Description

This application claims priority to Chinese Patent Application No. CN 202211231600.X, filed on Oct 8, 2022, the disclosure of which is incorporated herein by reference in its entirety.

### TECHNICAL FIELD

The present application relates to an energy storage apparatus and, in particular, to a battery pack for supplying power to an electronic device.

### BACKGROUND

A battery pack for supplying power to a power tool typically has a housing made of plastic. In addition, in order to ensure the stability of a cell group in the housing, a cell bracket capable of supporting the cell group is disposed in the housing. The cell bracket is fixedly connected to the housing, thereby ensuring that the cell group has a fixed position in the housing. Relatively large gaps typically exist between the peripheral surfaces of cells and the housing due to the existence of the cell bracket. Air in these gaps functions as a thermal insulator and slows down the heat transfer from the cells to the surrounding environment through the outer wall of the housing.

### SUMMARY

In order that deficiencies in the existing art are solved, an object of the present application is to provide a battery pack with better heat dissipation performance.

To achieve the preceding object, the present application adopts the technical solutions described below.

A battery pack for supplying power to an electronic device includes: a housing formed with multiple accommodating cavities; and multiple cells, where a cell has an outer peripheral surface, and the distance between at least part of the outer peripheral surface and the intra-cavity wall surface of a respective accommodating cavity is greater than or equal to 0 mm and less than or equal to 1 mm. The area of the outer wall surface of the housing is larger than or equal to 4.5 dm² and smaller than or equal to 7 dm².

In an example, the ratio of the capacity of the battery pack to the heat dissipation area is higher than or equal to 1.2 Ah/dm² and lower than or equal to 3.5 Ah/dm².

In an example, the thermal conductivity of the housing is greater than or equal to 0.6 W/(m*k).

In an example, the housing is provided with no heat dissipation opening.

In an example, the housing has a cylindrical structure with the outer wall surface and two opposite end surfaces.

In an example, the battery pack further includes: a panel assembly disposed on one end surface of the cylindrical structure; an electronic control assembly disposed on another end surface of the cylindrical structure; and an end cover assembly covering the panel assembly or the electronic control assembly.

In an example, the battery pack further includes a fixing member configured to penetrate through and connect the end cover assembly, the panel assembly, the electronic control assembly, and the housing along the longitudinal extension direction of the cell.

In an example, the housing is fixed to at least one of the panel assembly and the electronic control assembly through ultrasonic welding.

In an example, a metal insert is disposed in the housing.

In an example, the intra-cavity wall surface is formed with a fitting rib.

In an example, the cell is a cylindrical cell, where the axial length of the cell is greater than or equal to 60 mm and less than or equal to 75 mm, and the diameter of the cross section of the cell is greater than or equal to 15 mm and less than or equal to 25 mm.

In an example, the distance from the intra-cavity wall surface to the outer wall surface is greater than or equal to 1 mm and less than or equal to 5 mm.

In an example, the battery pack further includes multiple metal terminals configured to be electrically connected to the multiple cells and used for outputting electrical energy, where the creepage distance between metal terminals is greater than 8 mm and less than or equal to 20 mm.

In an example, the battery pack further includes a terminal block on which the multiple metal terminals are disposed and a terminal cover provided with grids corresponding to the multiple metal terminals, where the terminal cover is sealingly connected to the terminal block.

In an example, the housing includes at least two sub-housings which are independent, and the battery pack further includes an intermediate member disposed between different ones of the at least two sub-housings and sealingly connected to the different sub-housings.

A battery pack includes a housing including an inner wall and an outer wall, where the inner wall extends to form multiple accommodating cavities; and multiple cells disposed in the multiple accommodating cavities.

A battery pack includes: a housing configured to have a cylindrical structure with an outer wall surface and two opposite end surfaces, where multiple accommodating cavities are formed in the cylindrical structure; and multiple cells disposed in the multiple accommodating cavities. The ratio of the capacity of the battery pack to the area of the cross section of the cylindrical structure is higher than or equal to 8 Ah/dm² and lower than or equal to 17 Ah/dm².

In an example, the thermal conductivity of the housing is greater than or equal to 0.6 W/(m*k).

In an example, the housing is provided with no heat dissipation opening.

In an example, a metal insert is disposed in the housing.

### BRIEF DESCRIPTION OF DRAWINGS

FIG. 1 is a perspective view of a battery pack according to an example;
FIG. 2 is a perspective view of a battery pack from another angle according to an example;
FIG. 3 is an exploded view of a battery pack according to an example;
FIG. 4 is an exploded view of partial structures of a battery pack according to an example;
FIG. 5 is an exploded view of a housing and cells according to an example;
FIG. 6 is a cross-sectional view of a housing according to an example;
FIG. 7 is a sectional view of a battery pack according to an example; and

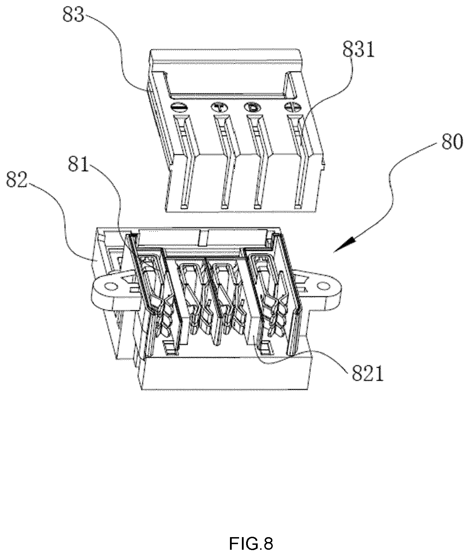

FIG. 8 is an exploded view of a terminal assembly in an example.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" " and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

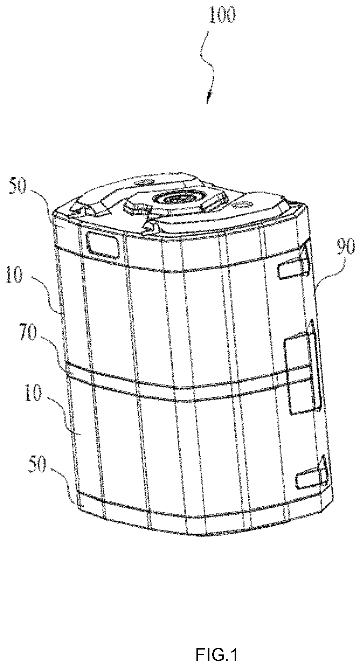

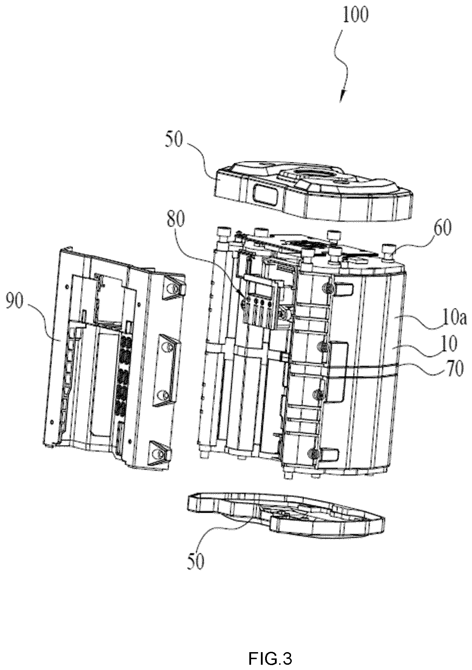

As an energy storage apparatus, a battery pack 100 shown in FIGS. 1 to 3 can store electrical energy to supply power to an electronic device. In this example, the electronic device may include a large-sized outdoor moving device such as a riding mower and a snow thrower. Alternatively, the electronic device may include some energy conversion devices, such as an adapter or an inverter, capable of converting the electrical energy outputted by the battery pack 100 so as to supply the power to other small-sized power tools such as handheld power tools and supply the power to some household electric devices such as a lamp, a mosquito-killing device, a fan, a cell phone, a computer, and other electric devices in daily lives.

In this example, the inner wall surface of a housing 10 of the battery pack 100 shown in FIGS. 1 to 7 extends to be capable of forming multiple accommodating cavities 11. In this example, the housing 10 is directly used for supporting cells 20, and the outer wall surface 10a of the housing 10 is directly exposed to the external environment. In this example, each accommodating cavity 11 may be used for accommodating one cell 20. In some examples, one accommodating cavity 11 may accommodate multiple cells 20. In this example, the line connecting the centers of cells 20 in any two accommodating cavities 11 may pass through the cavity walls of the accommodating cavities 11. That is to say, there are cavity walls as blocks between any two accommodating cavities 11 so that any two accommodating cavities 11 cannot communicate with each other.

In this example, the housing 10 directly supports the cells 20, which may be understood as the case where no other intermediate member capable of supporting a cell 20 is disposed between an accommodating cavity 11 formed by the housing 10 and the cell 20, and the distance between the intra-cavity wall surface 11a of the accommodating cavity 11 and at least part of the outer peripheral surface 20a of the cell 20 is greater than or equal to 0 mm and less than or equal to 1 mm. It is to be understood that when the distance between the intra-cavity wall surface 11a of the accommodating cavity 11 and the at least part of the outer peripheral surface 20a of the cell 20 is greater than or equal to 0 mm and less than or equal to 1 mm, the outer peripheral surface 20a of the corresponding cell 20 may be considered to be in contact with the intra-cavity wall surface 11a of the accommodating cavity 11 substantially. In this way, the heat of the cell 20 can be directly transferred to the intra-cavity wall surface 11a of the housing 10 and then dissipated to the outside through the outer wall surface 10a. For example, the cell 20 is a cylindrical cell, and the accommodating cavity 11 is a cylindrical accommodating cavity adaptable to the cylindrical cell. The inner diameter of each accommodating cavity 11 is larger than or equal to the outer diameter of the cell 20, and the gap between the intra-cavity wall surface 11a of the accommodating cavity 11 and the outer peripheral surface 20a of the cell 20 is very small. In some examples, the cell 20 may be square, and the corresponding accommodating cavity 11 may also be square.

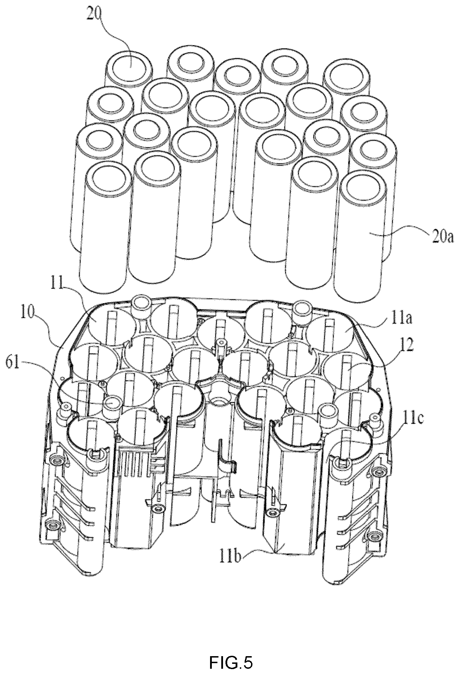

In an example, as shown in FIG. 5, the intra-cavity wall surface 11a of the accommodating cavity 11 may be formed with a fitting rib 12. When the cell 20 is mounted to the accommodating cavity 11, the fitting rib 12 can function as a guide and conducts the heat from the cell 20 directly to the accommodating cavity 11 at the same time. In an example, a thermally-conductive flexible material may also be disposed between the cell 20 and the intra-cavity wall 11a so that the heat dissipation performance of the housing 10 is improved. It is to be noted that even if a flexible heat dissipation material is disposed between the cell 20 and the intra-cavity wall 11a, the housing 10 may also be considered to directly support the cell 20. The direct support in this example may be understood as the support of a hard structure to the cell 20.

In this example, the thermal conductivity of the housing 10 is greater than or equal to 0.6 W/(m*k). For example, the thermal conductivity of the housing 10 may be 0.6 W/(m*k), 0.7 W/(m*k), 0.8 W/(m*k), or 0.9 W/(m*k).

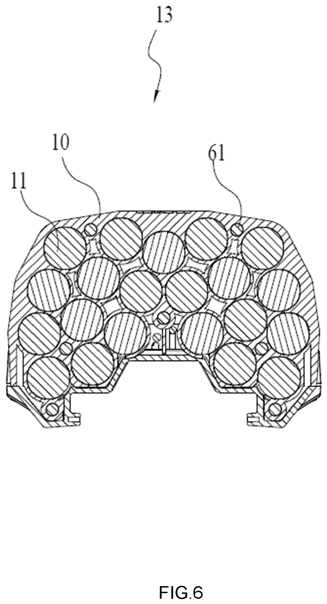

In this example, the housing 10 is configured to have a cylindrical structure with two opposite end surfaces, where the multiple accommodating cavities 11 are disposed in the cylindrical structure. The radial extension direction of the accommodating cavity 11 substantially coincides with the mounting direction of the cell 20, and the end surfaces of the cylindrical structure may be substantially flush with two end surfaces of the cell 20 mounted in the accommodating cavity 11. In this example, the shape of the cross section 13 of the cylindrical structure shown in FIG. 6 substantially coincides with the shape in which the cells 20 are arranged in the housing 10. In this example, the shape of the connecting line of the tangent lines of the outer peripheral surfaces of outermost cells in the cylindrical structure substantially coincides with the shape of the cross section 13, that is to say, the connecting line of all the tangent lines of the outer peripheral surfaces of the outermost cells may form the outer wall surface of the cylindrical structure. In this example, the cross section 13 has a shape like a "crescent". In other examples, the cross section 13 may have a circular shape, a square shape, or other special shapes, which is not limited in this example.

In this example, the axial length of the cell 20 is greater than or equal to 60 mm and less than or equal to 75 mm, and the diameter of the cross section of the cell 20 is greater than or equal to 15 mm and less than or equal to 25 mm. Accordingly, the axial length of the housing 10 of the cylindrical structure is greater than or equal to 60 mm and less than or equal to 85 mm. In this example, the axial length of the housing 10 is slightly greater than the axial length of the cell 20.

The area of the cross section 13 of the housing 10 is larger than or equal to 0.9 dm² and smaller than or equal to 1.1 dm². For example, the area of the cross section 13 may be 1 dm². In this example, the ratio of the capacity of the battery pack 100 to the area of the cross section 13 is higher than or equal to 8 Ah/dm² and lower than or equal to 17 Ah/dm².

In this example, since the outer wall surface 10a of the housing 10 is directly exposed to the external environment, the housing 10 can directly conduct the heat of the battery pack 100 into the air to dissipate the heat of the battery pack 100. In this example, the outer wall surface 10a of the housing 10 is a heat dissipation surface of the battery pack. A heat dissipation area of the heat dissipation surface is a surface area of the outer wall surface 10a. The heat dissipation area of the heat dissipation surface is larger than or equal to 4.5 dm² and smaller than or equal to 7 dm². For example, the heat dissipation area of the heat dissipation surface may be 5 dm², 5.5 dm², 6 dm², or 7 dm². The ratio of the capacity of the battery pack 100 to the heat dissipation area of the outer wall surface 10a is higher than or equal to 1.2 Ah/dm² and lower than or equal to 3.5 Ah/dm². For example, the ratio of the capacity of the battery pack 100 to the heat dissipation area of the outer wall surface 10a may be 1.5 Ah/dm², 2 Ah/dm², 2.5 Ah/dm², or 3 Ah/dm². In this example, heat dissipation requirements of the battery pack 100 can be satisfied through the heat dissipation of the housing 10, and the housing 10 may be provided with no heat dissipation opening, or no heat dissipation fan may be disposed in the battery pack 100. In this example, in order that the uniformity of the heat dissipation of the housing 10 is ensured, the thickness from the inner wall surface of the housing 10 to the outer wall surface 10a of the housing 10 is substantially uniform. The thickness is greater than or equal to 1 mm and less than or equal to 5 mm. For example, the thickness may be 2 mm, 3 mm, or 4 mm.

The housing 10 is generally plastic, and the heat dissipation performance of the battery pack 100 is ensured because the housing 10 accommodating or supporting the cells 20 is directly exposed to the external environment, but the overall strength of the battery pack 100 may be affected. To enhance the overall strength of the battery pack 100 and ensure the reliability of the heat dissipation performance, a metal insert (not shown) may be embedded in the housing 10. The metal insert can enhance the strength of the housing 10, and the thermal conductivity of a metal is better. In an example, the metal insert may be an aluminum alloy having a thickness of about 1 mm.

In this example, the battery pack 100 further includes a panel assembly 30, an electronic control assembly 40, and an end cover assembly 50. The panel assembly 30 may be attached to the two end surfaces of the housing 10 to seal or insulate the positive and negative ends of the cell 20 mounted in the accommodating cavity 11. In this example, the panel assembly 30 may include insulation paper, a sealing sponge, a sealing gasket, or the like. The shape of the panel assembly 30 substantially coincides with the shape of the cross section 13 of the housing 10. The electronic control assembly 40 may be a circuit board mounted on the panel assembly 30, where electronic elements disposed on the circuit board can be electrically connected to the positive or negative electrode of the cell 20. An element for collecting a cell parameter such as a voltage, a current, or a temperature may be disposed on the circuit board. A control element may also be disposed on the circuit board and can control the charging and discharging of the cell 20 according to the collected cell parameter. The end cover assembly 50 covers the electronic control assembly 40 and can seal the cells 20, the panel assembly 30, and the electronic control assembly 40 within the housing 10. In this example, the end cover assembly 50 includes at least upper and lower end covers covering the two end surfaces of the housing 10 separately.

In this example, the seal between the cover plate assembly 50 and the housing 10 may be implemented with a sealant. The housing 10 and the cover plate assembly 50 may be plastic members, where plastic molecules may be fused to each other through ultrasonic welding so that the seal between the housing 10 and the cover plate is implemented. In an example, the panel assembly 30, the electronic control assembly 40, the housing 10, and the end cover assembly 50 may also be sealingly connected to each other at joints through the ultrasonic welding.

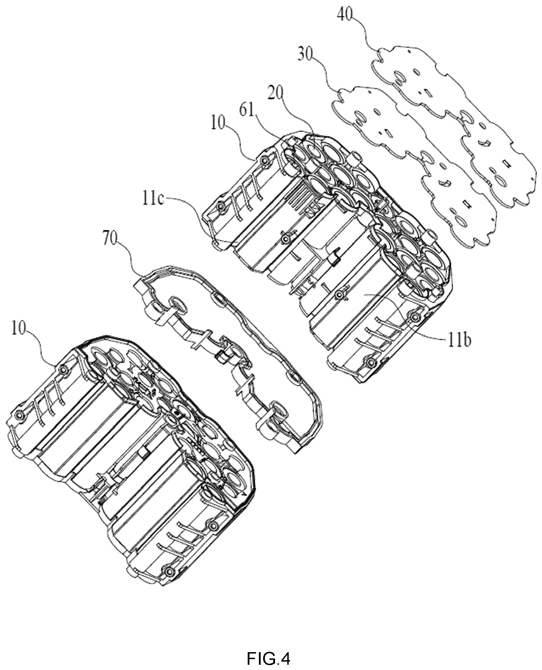

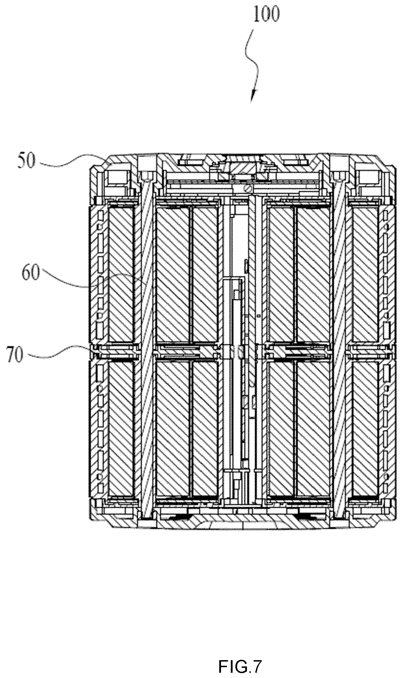

As shown in FIG. 7, in order to ensure the stability of the battery pack 100, multiple fixing members 60 may be used for connecting the panel assembly 30, the electronic control assembly 40, or the cover plate assembly 50 after penetrating through the housing 10. In this example, as shown in FIGS. 4 to 6, the multiple accommodating cavities 11 in the housing 10 are closely arranged, and a hole 61 through which a fixing member 60 penetrates may be disposed in a gap formed through the arrangement of any two or more accommodating cavities 11. The hole 61 through which the fixing member 60 penetrates may also be disposed at the edge of the housing 10 or another place so that the area of the cross section 13 is not increased.

In an example, one housing 10 may accommodate a group of cells 20. The number of groups of cells 20 may be increased so that a battery pack 100 with a higher rated voltage is obtained. In an example, two housings 10 each accommodate one group of cells 20, and two groups of cells may be electrically connected to each other. For example, the rated voltage of one group of cells is 28 V, and the rated voltage of the battery pack 100 constituted by the same two groups of cells is 56 V. The rated voltage of the battery pack 100 may be higher than 56 V, and the number of cells 20 or cell groups accommodated in the corresponding housing 10 may be increased accordingly. As shown in FIGS. 1 to 4, a connector 70 may be disposed between the two housings 10 accommodating the two groups of cells, where the connector 70 may be a plastic member capable of providing electrical isolation between the two groups of cells. In an example, the upper and lower surfaces of the connector 70 may be each provided with slots, and the slots can cover the lower end surface of one housing 10 and the upper end surface of the other housing 10, thereby connecting the two housings 10 together. In an example, plastic molecules may be fused to each other through technologies such as the ultrasonic welding and hot plate welding so that the connector 70 and the two housings 10 are sealingly connected. In an example, the fixing member 60 may penetrate through the connector 70 to fix the two groups of cells so that the overall strength and safety of the battery pack 100 are increased.

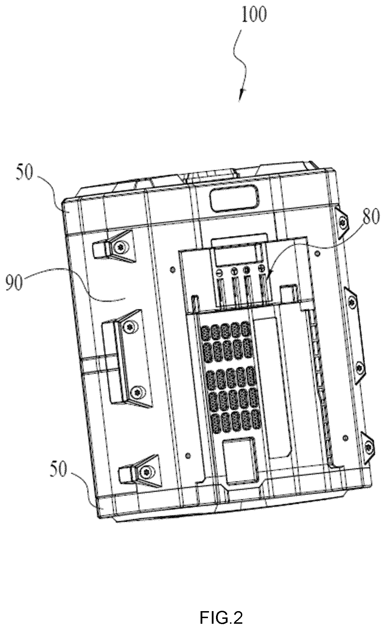

As shown in FIGS. 2, 3, and 9, the battery pack 100 further includes a terminal assembly 80 mainly including multiple metal terminals 81 and a terminal block 82. The metal terminals 81 are mounted on the terminal block 82, and partitions 821 are disposed on the terminal block 82 so that the metal terminals 81 can be spaced apart from each other and there is a certain creepage distance between different metal terminals. The metal terminal 81 may include at least a positive terminal, a negative terminal, and a communication terminal and can be connected to a corresponding connection terminal on a charger or a power tool such that the charging or discharging is performed. Typically, the terminal assembly 80 may be mounted in the housing 10, and a grid which can correspond to each of the metal terminals 81 is reserved on the housing 10 so that the metal terminals 81 are exposed to facilitate the connection of the charger or the power tool. However, there are certain safety hazards in the preceding method. For example, when the nominal voltage of the battery pack 100 is relatively high, the metal terminals are easily short-circuited and the battery pack is damaged.

To solve the preceding problem, the terminal assembly 80 may further include a terminal cover 83. The terminal cover 83 is disposed on the terminal block 82 and is sealingly connected to the terminal block 82. In addition, grids 831 corresponding to the metal terminals 81 are disposed on the terminal cover 83 so that the metal terminals 81 can be exposed. The sealing connection may be understood as the sealing of the joint between the two components connected to each other. In addition to the original partition 821, a grid 831 on the terminal cover 83 is also provided for each metal terminal 81. Therefore, the creepage distance between adjacent metal terminals 81 is increased. In an example, the creepage distance between the metal terminals 81 is greater than 8 mm and less than or equal to 20 mm. For example, the creepage distance between the metal terminals 81 may be 9 mm, 10 mm, 11 mm, 12 mm, 13 mm, 14 mm, 15 mm, 16 mm, 17 mm, 18 mm, 19 mm, or 20 mm.

In this example, the terminal assembly 80 may be disposed on the outside of the housing 10, and the housing 10 is provided with a connection hole through which the metal terminal 81 can be electrically connected to a cell lead-out end on the electronic control assembly 40 in the housing 10.

In an example, to improve the stability of the connection between the battery pack 100 and the tool, a mounting housing 90 may be disposed on a side surface of the housing 10, where the side surface may be inwardly recessed. In this example, the terminal assembly 80 is fixed to the housing 10, and the mounting housing 90 may be fixed to the housing 10 by a connector such as a screw. In addition, the mounting housing 90 is provided with an opening matched with the size of the terminal assembly 80. In an example, the mounting housing 90 is further provided with a sliding groove which can guide the battery pack 100 to be mounted to the tool.

In an example, as shown in FIGS. 4 and 5, a side surface of the housing 10 below the mounting housing 90 may be open, where the side surface may be constituted by the inwardly-contracting extra-cavity wall surfaces 11b of the multiple accommodating cavities 11. An extra-cavity wall surface 11b is provided with a groove 11c which can improve the heat dissipation performance of the cell 20.

Different from battery packs in the existing art which are provided with cell brackets and housings, the battery pack in this example may be considered to be provided with no cell bracket, a cell bracket is directly used as part of the housing of the battery pack, or part of the housing of the battery pack constitutes a cell bracket. Thus, a layer of spacer (the housing) exists between the outside and part of cells in the cell assembly which are disposed at an edge. However, in the existing battery pack, at least two layers of spacers exist between cells and the outside, where one layer is a cell bracket, and the other layer is a housing. Therefore, with the design with no cell bracket in the present application, the heat dissipation performance of the battery pack can be greatly improved without the need to provide a heat dissipation opening.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A battery pack (100) for supplying power to an electronic device, comprising:
a housing (10) formed with a plurality of accommodating cavities (11); and
a plurality of cells (20), wherein each cell among the plurality of cells has an outer peripheral surface (20a), and a distance between at least part of the outer peripheral surface and an intra-cavity wall surface (11a) of a respective accommodating cavity among the plurality of accommodating cavities is greater than or equal to 0 mm and less than or equal to 1 mm;
wherein an outer wall surface (10a) of the housing is a heat dissipation surface, and a heat dissipation area of the heat dissipation surface is larger than or equal to 4.5 dm² and smaller than or equal to 7 dm².

2. The battery pack according to claim 1, wherein a ratio of a capacity of the battery pack to the heat dissipation area is higher than or equal to 1.2 Ah/dm² and lower than or equal to 3.5 Ah/dm².

3. The battery pack according to claim 1, wherein thermal conductivity of the housing is greater than or equal to 0.6 W/(m*k).

4. The battery pack according to claim 1, wherein the housing is provided with no heat dissipation opening.

5. The battery pack according to claim 1, wherein the housing has a cylindrical structure with the outer wall surface and two opposite end surfaces.

6. The battery pack according to claim 5, further comprising: a panel assembly (30) disposed on one end surface of the cylindrical structure;
an electronic control assembly (40) disposed on another end surface of the cylindrical structure; and
an end cover assembly (50) covering the panel assembly or the electronic control assembly.

7. The battery pack according to claim 6, further comprising a fixing member (60) configured to penetrate through and connect the end cover assembly, the panel assembly, the electronic control assembly, and the housing along a longitudinal extension direction of the cell.

8. The battery pack according to claim 6, wherein the housing is fixed to at least one of the panel assembly and the electronic control assembly through ultrasonic welding.

9. The battery pack according to claim 1, wherein a metal insert is disposed in the housing.

10. The battery pack according to claim 1, wherein the intra-cavity wall surface is formed with a fitting rib.

11. The battery pack according to claim 1, wherein the cell is a cylindrical cell, wherein an axial length of the cell is greater than or equal to 60 mm and less than or equal to 75 mm, and a diameter of a cross section of the cell is greater than or equal to 15 mm and less than or equal to 25 mm.

12. The battery pack according to claim 1, wherein a distance from the intra-cavity wall surface to the outer wall surface is greater than or equal to 1 mm and less than or equal to 5 mm.

13. The battery pack according to claim 1, further comprising a plurality of metal terminals (81) configured to be electrically connected to the plurality of cells and used for outputting electrical energy, wherein a creepage distance between metal terminals among the plurality of metal terminals is greater than 8 mm and less than or equal to 20 mm.

14. The battery pack according to claim 13, further comprising a terminal block (82) on which the plurality of metal terminals are disposed and a terminal cover (83) provided with grids (831) corresponding to the plurality of metal terminals, wherein the terminal cover is sealingly connected to the terminal block.

15. The battery pack according to claim 1, wherein the housing comprises at least two sub-housings which are independent, and the battery pack further comprises an intermediate member disposed between different ones of the at least two sub-housings and sealingly connected to the different sub-housings.
